(19) Europäisches Patentamt
European Patent Office
Office européen des brevets

(11) **EP 4 760 155 A1**

(12) **EUROPEAN PATENT APPLICATION**

(43) Date of publication:
**17.06.2026 Bulletin 2026/25**

(21) Application number: **24220245.5**

(22) Date of filing: **16.12.2024**

(51) International Patent Classification (IPC):
**F24D 10/00** (2022.01)    **F24D 19/10** (2006.01)
**F24H 15/144** (2022.01)    **F24H 15/104** (2022.01)
**F24H 15/212** (2022.01)    **F24H 15/238** (2022.01)
**F24H 15/414** (2022.01)    **F24H 15/443** (2022.01)
**F24H 15/45** (2022.01)

(52) Cooperative Patent Classification (CPC):
**F24D 10/00; F24D 19/1048; F24H 15/104;
F24H 15/144; F24H 15/212; F24H 15/238;
F24H 15/414; F24H 15/443; F24H 15/45;**
F24D 2200/13

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Kamstrup A/S
8660 Skanderborg (DK)**

(72) Inventors:
• **Christiansen, Lars
8660 Skanderborg (DK)**
• **Kristensen, Mick Althoff
8660 Skanderborg (DK)**

(74) Representative: **Patentanwälte Hemmer Lindfeld
Frese
Partnerschaft mbB
Wallstraße 33a
23560 Lübeck (DE)**

(54) **METHOD FOR MONITORING THE STATE-OF-CONDITION OF PIPES IN A DISTRICT HEATING DISTRIBUTION NETWORK AND HEAT METER**

(57)    The invention relates to a method for monitoring the state-of-condition of pipes in a district heating distribution network (1), the heating distribution network comprising a plurality of consumer sites (3),
with the following steps:
a) determining a flow rate ($q$) and an inlet fluid temperature ($T_1$) at a consumer site (3),
b) detecting an event of fluid consumption,
c) determining a change of the inlet fluid temperature ($T_1$) in the time period of the event,
d) calculating a characteristic value based on the determined change of the fluid inlet temperature ($T_1$) and the flow rate,
e) repeating the steps b) to d) for a period of time, and
f) monitoring the characteristic values ($k$) or derived values based on the characteristic values as an indicator for the state-of-condition of a pipe connected to the consumer site (3).

Fig.3

## Description

The invention refers to a method for monitoring the state-of-condition of pipes in a district heating distribution network.

In heating distribution networks heat provided for example by a district heating utility plant is distributed to a large number of consumer sites through a piping network via a heat transfer medium flowing in the piping network. For billing purposes, usually heat meters are provided at the consumer sites which record the heat consumption at the consumer site. In those district heating distribution networks heat losses due to bad conditions of the pipes for example should be avoided and should be detected to allow a repair of the respective pipe.

EP 3 531 368 A1 discloses a method for analysis of the heat distribution network based on data collected by use of an advanced metering infrastructure. According to this method, data are collected by the meters during a longer interval of collection and values derived from the collected data are transferred to a Head End System for further calculations allowing to evaluate the condition of the heat distribution network.

A general problem when monitoring the state-of-condition of a heating distribution network are changes in the operating conditions, changing flows and temperatures, i.e. a fluctuation of values detected, in particular values detected by the heat meters.

In view of this it is the object of the invention to provide a more robust and dynamic method for monitoring the state of condition of pipes in a district heating distribution network on basis of data collected at the consumer sites.

This object is achieved by a method having the features defined in claim 1, by a heat meter having the features defined in claim 14 and by a heating distribution network control system having the features defined in claim 18. Preferred embodiments are defined in the dependent subclaims, the following description and the accompanying drawings.

The method according to the inventions is provided and configured for use in a district heating distribution network. The district heating distribution network comprises a piping network consisting of pipes for connecting consumer sites and at least one heat producing unit. The heating distribution network comprises a plurality of consumer sites and may comprise one or more heat producing units, like district heating utility plants. Usually, the piping network consists of main pipes and smaller pipes branching from the main pipes towards to the consumer sites.

According to the method, the state-of-condition of at least one of the pipes in the district heating distribution network is monitored on the basis of data collected at a consumer site. At the consumer site there is determined a flow rate and an inlet fluid temperature. In a next step, an event of fluid consumption is detected, preferably on basis of the determined flow rate and/or the determined inlet fluid temperature at the consumer site. In a following step there is determined a change of the inlet fluid temperature in the time period of the event. The time period of the event may be a predefined period or time, or the period of time until the temperature reaches a maximum temperature, i.e. becomes stable at a maximum, or the time period until the flow rate reaches its normal level or a steady state level. This means the change of fluid temperature is regarded only in the case of an event of fluid consumption and preferably during the period of the detected event. In the following step a characteristic value is calculated based on this determined change of the fluid inlet temperature and the flow rate determined. The steps of determining a flow rate and the inlet fluid temperature, the detecting of an event of fluid consumption and calculating a characteristic value based on a determined change of the fluid inlet temperature and the flow rate are repeated several times for a period of time, preferably, they are repeated in a continuous manner. By this, several characteristic values are calculated over this period of time and it is possible to monitor the development of the characteristic values over time. For this according to the method, the characteristic values or values derived based on those characteristic values are monitored as an indicator for the state-of-condition of a pipe connected to the consumer site. All the measurements and the calculated characteristic value or values preferably are time stamped. A change in the characteristic value or a derived value may for example be an indicator of a change of the state-of-condition of the respective pipe connected to the consumer site, for example indicating a damage in the insulation of the pipe, a leakage or another malfunction of the pipe. The method according to the invention, thus, in particular allows to monitor the state-of-condition of the pipe connecting a respective consumer site on basis of values, i.e. the temperature and the flow rate determined at the respective consumer site. This can be done without the use of a Head End System. The calculation of the characteristic value can be carried out by a computing device at the consumer site, for example in a heat consumption meter installed at the consumer site. Also the monitoring of the characteristic value can be carried out at the consumer site or the characteristic value may be transmitted to a Head End System or an external monitoring system for doing the monitoring of the characteristic value. A Head End System is typically a cloud based data collection, data management and data presentation system, which at the end presents the characteristic value to service people of the heat distribution network. This allows to take into consideration further parameters or information provided by other sensors or a database.

The detected event of fluid consumption preferably is characterized by an increase of the flow rate from a low flow rate to a high flow rate. The flow rate may for example change if a valve is opened or a pump is activated at the consumer site. The increase in flow rate is an indicator for fluid consumption or heat consumption at the consumer site. The change of the inlet fluid temperature determined in at least a part of the time period of the detected event preferably is a rise of the inlet fluid temperature in the time period of the event and preferably in the period of said high flow rate during the event. Thus, preferably first the increase in flow rate is detected as the beginning of an event of fluid consumption and then the change of the inlet fluid temperature is determined when the flow is on the higher level. Usually, the increase of flow will occur suddenly whereas the temperature increase is more slowly, i.e. the gradient of the flow curve is much greater than the gradient of the temperature curve during the event of fluid consumption.

It has become apparent that the described method is more robust compared to methods used before to monitor the state of condition of the pipes in a heat distribution network on basis of values measured at the consumer sites. In particular, the fluctuation of the values is decreased when considering values only in an event of fluid consumption as described before.

The characteristic value calculated on the basis of the determined change of the fluid temperature and the flow rate preferably is a heat loss rate or a heat transfer coefficient, respectively. According to a further possible variation of the method the length of a service pipe from a main distribution pipe to the consumer site is acquired and used to calculate a heat transfer coefficient of a length unit of the service pipe on the basis of the flow rate, the inlet temperature and the information of the length. The information of the length may for example be taken from a geoinformation system, a map of the heat distribution network or similar data base. The length information gives a more precise statement on the loss of energy per unit length. The geoinformation data, i.e. information of the length can for example be obtained from the heating works via a head end system. By combining the locally determined heat loss rate with the length of the service pipe the amount of energy lost to the surroundings per meter service pipe can be determined. The calculated heat loss rate only gives an indication of a high or low value which is not unambiguous because a high value can be caused by a leak in the service pipe or simply be caused by a service pipe that is very long, for example. Combining the heat loss rate with the length of the service pipes makes it possible to discriminate between these two situations and give a more precise statement about the state-of-condition of a pipe, especially a service pipe. The heat transfer coefficient has the unit Watt/(meter * Kelvin). The heat loss rate can be calculated on basis of the determined inlet fluid temperature rise and at least one determined flow rate. Further preferably, the heat loss rate is calculated on the basis of the determined inlet fluid temperature rise, a detected low flow rate before the event and on basis of the detected high flow rate during the event. Thus, a change in flow rate may be taken into consideration for calculation of the heat loss rate. As described before, in an event of fluid consumption or heat consumption usually the flow rate will increase very rapidly from a low flow rate to a high flow rate. This low starting flow rate and the high flow rate after the increase are preferably used for calculation of the heat loss rate.

If the characteristic value is a heat loss rate $k$, this heat loss rate $k$ may be calculated according to the following formula:

$$k = \frac{du}{dt} \cdot \frac{1}{\bar{u}\left(\frac{q_{new}}{q_0} - 1\right)}$$

In this equation, $du/dt$ is the rate of change, i.e. the rate of temperature change during the inlet temperature rise. The value $\bar{u}$ is the averaged inlet fluid temperature during the event or during a part of the event. The flow rate $q_0$ is the low flow rate, i.e. the basis flow rate before the event, i.e. before the detected increase of flow rate. The flow rate $q_{new}$ is the high flow rate during the event, i.e. the high flow rate after the sudden increase in flow rate detected. As can be seen, the heat loss rate $k$ thus can be calculated on basis of values detected at the consumer site. Thus, the calculation of the heat loss rate $k$ can be carried out at the consumer site without the use of a Head End System.

According to a possible embodiment of the method, an event with an increase in flow rate is regarded as an event of fluid consumption and triggering the detection of an event of fluid consumption and the further steps for calculating the characteristic value only in case that the flow rate increases from a low flow rate which has been constant over a predefined period of time. This ensures that there has been a steady state of flow rate further improving a robust calculation of the characteristic value, in particular, the heat loss rate $k$. By this, undesired fluctuations having a negative impact on the calculation of the characteristic value are avoided.

In a further possible embodiment of the method, a mean characteristic value is calculated on the basis of a multitude of characteristic values determined over time, in particular, the period of time in which the calculation of the characteristic value is repeated. Such a mean or averaged characteristic value, in particular, a mean heat loss rate $k$ may preferably be calculated at the consumer site, for example in a heat meter located at the consumer site.

The state-of-condition preferably is evaluated on the basis of a statistical distribution of a multitude of characteristic values or on the basis of a statistical distribution of mean characteristic values over time. This allows to make a more precise and more robust recognition of changes in the state-of-condition of pipes, in particular, the pipes connecting the respective consumer site.

A change of the state-of-condition of a pipe may preferably be determined if the characteristic value or the mean characteristic value, in particular a heat loss rate or a mean heat loss rate, shifts over time. Such a shift of a characteristic value or the heat loss rate indicates a change in the state of condition of the pipe, for example a deterioration or damage of the insulation of the respective pipe connected to the consumer site.

In a further variant of the method for determining a change of the state-of-condition the characteristic values or the mean characteristic values of a consumer site may be compared to the characteristic values or the mean characteristic values of one or more neighboring consumer sites. Such a comparison of characteristic values or mean characteristic values may be carried out in a Head End System. By such comparison it is for example possible to detect whether there is a change in the state of condition of a single pipe connected to one consumer site only or whether it is a change in the state of condition of a pipe leading towards several consumer sites, i.e. a pipe further upwards in the network and being connected to several consumer sites.

The flow rate and the inlet fluid temperature are preferably determined by a heat meter, i.e. by a control device or control software inside the heat meter. Thereby, preferably the sensors already available in the heat meter are used. Preferably, also the characteristic value is determined by the heat meter, i.e., preferably, by a software executed in a computing device of the heat meter. This allows the use of the heat meters installed in the network and avoids the installation of special sensors and electronics for monitoring the state-of-condition of the pipes connected to the consumer site.

Preferably, the characteristic values, derived values based on the characteristic values and/or mean characteristic values determined and calculated in a heat meter are transmitted to a Head End System, wherein data analysis of the characteristic values and monitoring of the state-of-condition of the pipes is carried out in the Head End System. The values transmitted preferably are time stamped by the heat meter. By this, the amount of data to be transmitted to the Head End System is reduced, since only the determined characteristic values, in particular, a determined heat loss rate, and further preferably a mean value or a mean heat loss rate which is determined in the heat meter is transmitted to the Head End System. This may be done in predefined intervals or for example on demand by the Head End System. Besides the characteristic value like the heat loss rate or the heat transfer coefficient the number of events used to calculate the average heat loss rate may be transmitted to the Head End System for further calculation or evaluation. By the Head End System further information and parameters may be used for monitoring the state-of-condition of the pipes of the heat distribution network. Furthermore, in the Head End System it is possible to compare the characteristic values and change of characteristic values for several, in particular neighboring heat meters, as described above.

Furthermore, in the Head End System for example data relating to the dimension and/or properties of the pipes are taken into consideration for analysis of the characteristic values and/or monitoring the state-of-condition. This allows a more precise and meaningful evaluation and monitoring. Such data could for example be the age of the pipes, or the year they are buried in the ground or the type of soil they are buried in. Also GIS-data (geographical information system data) can be taken into consideration, as they for example give information about the longitude and latitude of the pipes and hence the length.

Besides the method described above, a heat meter is subject of the present invention, in particular, a heat meter configured to carry out a method as described before. It has to be understood that preferred embodiments of the method described above are preferred embodiments of the heat meter, too, and vice versa.

The heat meter is provided for measurement of the heat consumption at a consumer site of a district heating distribution network, for example for measurement of the heat consumption of a building. The heat meter comprises at least one flow sensor, for example an ultrasonic flow sensor, and at least one temperature sensor. The temperature sensor, in particular, is a temperature sensor configured to detect the inlet fluid temperature at the consumer site. Preferably, a temperature sensor already present in the heat meter and used for energy consumption calculations is used for detecting the inlet fluid temperature. Furthermore, the heat meter comprises a computing device. The computing device may be configured to calculate the heat consumption and to record the heat consumption of the respective consumer site. According to the invention, the computing device is configured such that it determines a flow rate and an inlet temperature at the consumer site on basis of signals output by the flow sensor and the mentioned temperature sensor. This may be done for determining the heat consumption, but according to the invention the respective values are additionally used to determine a characteristic value for monitoring the state-of-condition of a pipe connected to the heat meter. The computing device is configured such that it detects an event of fluid consumption, preferably an increase in flow rate from a low flow rate to a high flow rate, as described above with reference to the method. Furthermore, the computing device is configured such that it determines a change of the inlet temperature, preferably, a rise of the inlet temperature, in the period of said event detected. Preferably, it is configured to determine a change of the inlet temperature at a high flow rate during said event. Furthermore, the computing device is configured to calculate at least one characteristic value based on the determined or recorded temperature rise. This may be done as described for the method and it is referred to the respective description above. This calculation may be done by a software module executed in the computing device of the heat meter. Said characteristic value is an indicator for the state-of-condition of a pipe connected to the respective consumer site.

Furthermore, the heat meter, preferably, comprises a communication interface which is configured for transmitting the at least one characteristic value or a derived value based on the characteristic value to the Head End System. The derived value may be a mean characteristic value. The communication interface, in particular, is a wireless communication interface.

In a further preferred embodiment, the heat meter and the computing device of the heat meter are configured to determine characteristic values on basis of the determined inlet fluid temperature changes in a repetitive manner as described above with reference to the method. This allows to calculate several characteristic values over a period of time allowing to calculate a mean characteristic value and to monitor a change of the characteristic values over time.

Preferably, the computing device of the heat meter is configured to calculate mean characteristic values on basis of a multitude of determined characteristic values, wherein preferably the computing device and the communication interface are configured to transmit the mean characteristic values to a Head End System. This is advantageous, since the amount of data to be transmitted to the Head End System is reduced. Instead of all the determined characteristic values only a mean characteristic value has to be transmitted from time to time, preferably, in predefined intervals or on demand by the Head End System. By this, the energy consumption of the heat meter can be reduced which is favorable with regard to the battery life time of the heat meter.

Besides the method and the heat meter described before, a heating distribution network control system is subject of the present invention. The heating distribution network control system comprises a multitude of heat meters as described before and a Head End System, which is configured for communication with the heat meters. The heat meters and the Head End System are configured to carry out a method as described above. In particular, the method may be carried out by a suitable computer program which is operated in the Head End System and software components which are executed in the heat meters.

In the following, the invention is described byway of example with reference to the accompanying drawings. In these:

Fig. 1 schematically shows a district heating distribution network.

Fig. 2 schematically shows the simultaneous measurements of flow rate and inlet fluid temperature at one point of consumption.

Fig. 3 schematically shows the flow rate and temperature over time at one point of consumption for a single event of fluid consumption.

Fig. 4 schematically shows the distribution of the heat loss rate $k$ for a number of events for a single point of consumption.

Fig. 5 schematically shows the average heat loss rate $k$ for eight different points of consumption

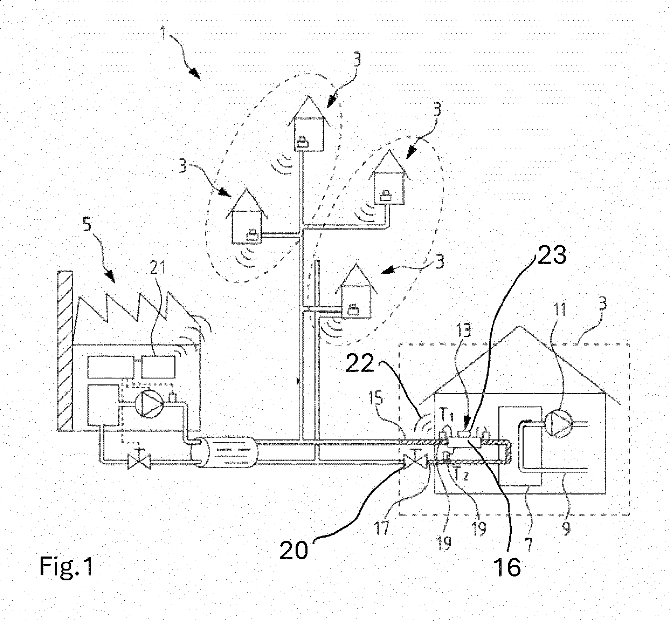

Fig. 1 schematically shows a district heating distribution network 1 for supplying consumer sites 3, i.e. points of consumption 3, with heat from a district heating plant 5 or central heating work 5, respectively. The consumer sites 3 may be buildings, private households, industrial consumers or any other type of consumer site, which may represent a billable entity for a utility provider. At a consumer site 3 usually there is provided a heat exchanger 7 as part of a heating system 9. The heating system 9 for example may have a circulation pump 11 for controlling and adjusting the heat transfer to the building. At each consumer site 3 there is installed a heat meter 13 which is configured to measure, record and report heat consumption data for the respective consumer site 3. The heat meter 13 is connected to a supply service pipe 15 upwards the heat exchanger 7. The heat meter 13 comprises a flow sensor 16 and two temperature sensors 19, wherein a first temperature 19 is provided to detect the inlet fluid temperature $T_1$ and the second temperature sensor 19 is located at the return pipe downwards the heat exchanger 7 to detect the return fluid temperature $T_2$. On basis of the detected inlet temperature $T_1$ the return temperature $T_2$ and a detected flow $q$ in the heat meter 13 the heat consumption of the consumer site is determined. In addition to the service pipe 15 the consumer site 3 is connected to the district heating distribution network 1 by second service pipe 17, being a return pipe. Furthermore, at the consumer site there is provided a valve 20 for adjusting the flow $q$ of heat transfer medium through the primary side of the heat exchanger 7. By controlling the valve 20 the heat supply towards the consumer site 3 can be adjusted.

The heat meters 13 each comprise a communication interface 22. Via the communication interface 22 the heat meters 13 can communicate with a Head End System 21. Via the communication interface heat consumption data can be transmitted to the Head End System 21 for billing purposes.

By use of the heat meters 13 at the consumer sites 3 it is furthermore possible to monitor the state-of-condition of the pipes in the heating distribution network 1, in particular, the service pipes 15 and 17 connecting the individual consumer sites 3 with the network. Although not shown in Fig. 1 each of the consumer sites 3 is connected to the network via two service pipes 15 and 17, i.e. a supply pipe 15 and a return pipe 17.

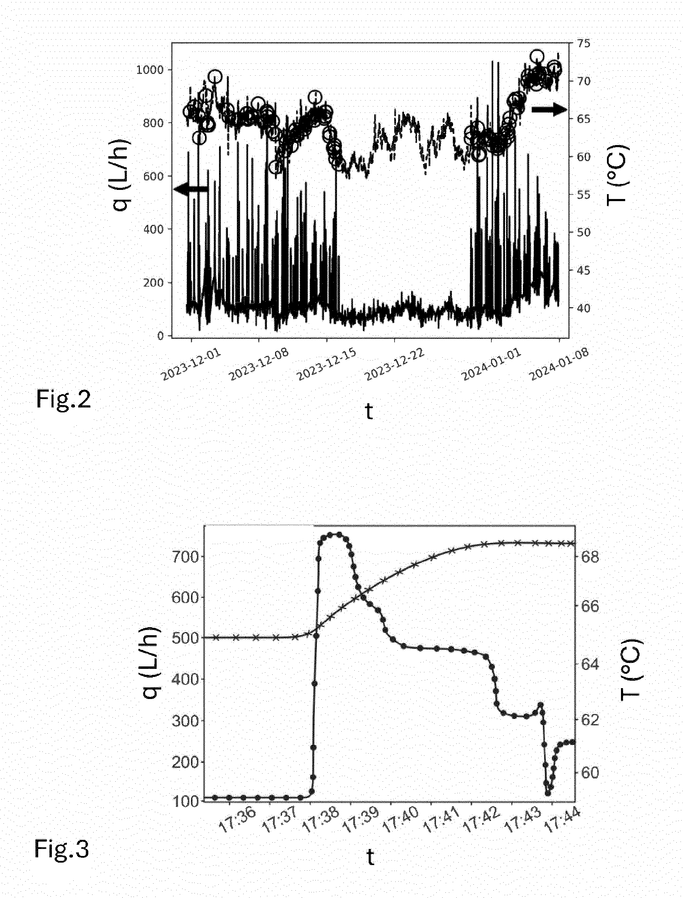

According to the invention, the state of condition of the pipes is monitored according to a control method which is carried out by use of the different heat meters 13 at the consumer sites and a central control in the Head End System 21. By this, for example, abnormalities of the pipes, for example leakage, defects in insolation etc. can be detected. Furthermore, the defects can be localized to a service pipe connection at a single consumer site 3. The method will be described in more detail with reference to Figs. 2 to 5.

Fig. 2 schematically shows the simultaneous measurements of flow rate q and the temperature T, i.e. the inlet temperature $T_1$, at a single consumer side 3. The solid line shows the flow $q$ , whereas the dashed line shows the temperature over time. The circles in the diagram indicate events of fluid consumption at the respective consumer site 3. At these events, in particular the flow suddenly increases, for example, due to opening of the valve 20, or due to an increased heat demand from the heat exchanger 7. This indicates that a heat consumption at the consumer site begins, for example due to a demand of hot water. For detecting those events of fluid or heat consumption the meters 13, in particular computing devices in the meters 13, are configured to monitor the flow rate and the fluid temperature, in particular the inlet fluid temperature $T_1$ at the respective consumer site 3. For monitoring the state-of-condition of the pipe the described events of fluid consumption are described in more detail. In the diagram in Fig. 2 it is visible that for example on 1 December 2024 there were several flow events with high flow rates of 1000 liters/hour. The corresponding temperatures ranged from 60°C to 63°C.

Fig. 3 shows a more detailed diagram showing flow rate q and temperature $T_1$ over time t on 1st January as shown in the diagram in Fig. 2. With regard to Fig. 3 one single event of fluid consumption is regarded. In Fig. 3 the flow rate is the line with the dots, whereas the temperature is represented by the line with the crosses. It is visible that an event of consumption starts at approximately 17:38h. At this time, the flow suddenly increases from approximately 100 liters/hour to more than 700 liters/hour. With the beginning of this event also the temperature T increases, however, the temperature increases with a smaller gradient than the flow rate, i.e. more slowly. For monitoring the state-of-condition of the pipes a heat loss rate k is calculated for an event of fluid consumption as described before. The heat loss rate k has the unit 1/sec. The heat loss rate k at the event may be calculated on basis of the following formula:

$$k = \frac{du}{dt} \cdot \frac{1}{\bar{u}\left(\frac{q_{new}}{q_0} - 1\right)}$$

In this formula, the value $q_0$ is the flow directly before the detected event of consumption, for example the flow at 17:38h in Fig. 3, approximately 110 L/h. Preferably, the value $q_0$ is calculated on the basis of a steady state flow (say 5 minutes steady flow) before the event. The value $q_0$ advantageously is a mean value. The flow rate $q_{new}$ is the flow rate during the event, i.e. directly after the increase in flow rate. At the event shown in Fig. 3 this higher flow rate $q_{new}$ is approximately 730 L/h. The value $q_{new}$ can be the maximum flow rate during the event or can be an averaged value of the flow q for the duration of the event. The value $\bar{u}$ is the averaged inlet temperature during the event, for example in Fig. 3 between 17:38h and 17:39h. $\frac{du}{dt}$ is a rate of temperature change of the inlet temperature $T_1$ in this time interval, i.e. in the example in Fig. 3 between 17:38h and 17:39h, for example.

$\frac{du}{dt}$ can be used to detect the end of an event or used to decide when to stop the sampling. For example, if $\frac{du}{dt}$ gets significantly smaller during the event than at the start of the event than the samplings during the event can be terminated. By this formula, the heat loss rate k for the respective event is calculated by the computing device 23 of the heat meter 13. The calculated k value is stored in the heat meter 13. In this way, many k-values are determined for many events of fluid consumption. The equation for k is formulated for the situation where the flow goes from low to high. If the flow goes from high flow to low flow the denominator must be $\bar{u}\left(1 - \frac{q_{new}}{q_0}\right)$.

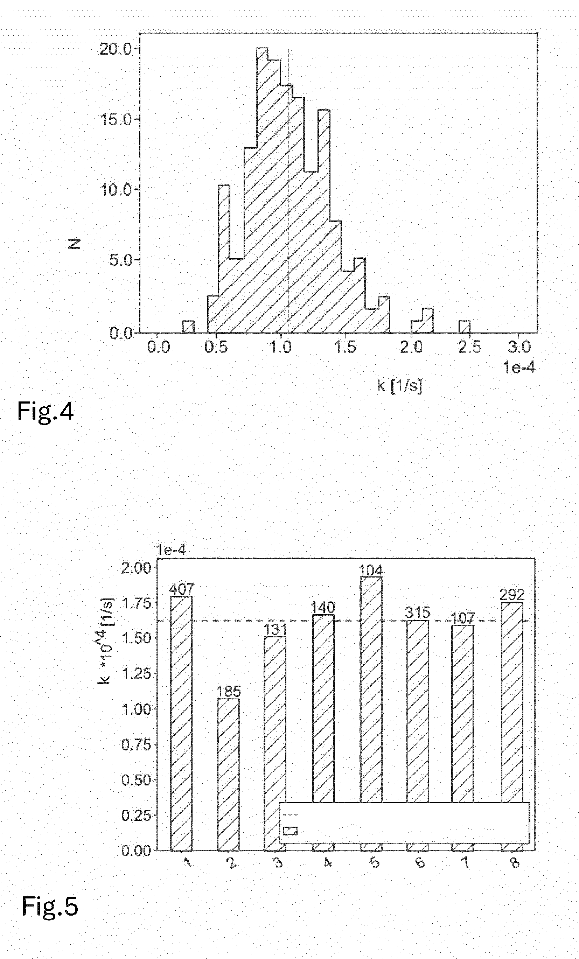

Fig. 4 shows a histogram for many heat loss rates k of one single consumer site 3 as shown in Fig. 1. For example, the heat transfer coefficient or the heat loss rate k, respectively, has been calculated for every event of fluid consumption for one month and thus, the bins of the histogram contain several hundred events. For example, there may be two to three events per day. In the histogram, the number N of events for the different heat loss rates k are shown. The dashed line shows the median value. From all the counts in the histogram an average value $k_{average}$ is calculated. In this example it has the value 1,1. This average value of the heat loss rate is used for further calculation. This average heat loss rate $k_{average}$ is transmitted via the communication interface 22 to the Head End System 21 for further analysis. In this way, the Head End System 21 receives the average heat loss rates k from several, preferably, all heat meters 13 in the heating distribution network.

Fig. 5 shows the heat loss rate k (the median value of k for each house) for eight houses or consumer sites 3 as an example, with the number of considered events shown above the bars. Taking the first consumersite no. one as an example it has an average heat loss rate k value of 1,8 and the value is based on 407 events. In addition to the average heat loss rate the heat meters 13 transmit the number of events underlying the average heat loss rate to the Head End System 21. The dashed line in Fig. 5 shows the mean k-value of all houses shown in the diagram. In this example, it is approximately 1,6. In this example for house no. two with 185 events there is a lower average k-value of 1,1. All the other seven houses shown in this example have the same type of service pipes, same material and same diameter of the service pipes 15, 17. House no. two, however, has a very long service pipe having a greater inner pipe diameter and a greater isolation pipe diameter than the other seven consumer sites 3. Thus, the heat loss in this service pipe is lower than in the other service pipes and the respective *k*-value is also lower. By comparing the *k*-values, i.e. the heat loss rates *k* of neighboring houses, it is possible to evaluate the quality and state-of-condition of the respective service pipe connection of each of the different consumer sites 3.

Furthermore, it is possible to monitor the change or shift of the average *k*-values for single consumer sites 3 in the Head End System 21 over a longer time. This allows to detect abnormal state-of-condition of single service pipes 15, 17, for example allows to detect a sudden or slow change of the state-of-condition. A sudden change may for example occur in case of a leakage, whereas a slow shift over time may indicate a deterioration due to aging, for example.

**List of reference numerals**

| 1 | district heating distribution network |
| 3 | consumer site |
| 5 | district heating plant |
| 7 | heat exchanger |
| 9 | heating system |
| 11 | circulator pump |
| 13 | heat meter |
| 15 | service pipe, supply or inlet pipe |
| 16 | flow sensor |
| 17 | return pipe |
| 19 | temperature sensors |
| 20 | valve |
| 21 | Head End System |
| 22 | communication interface |
| 23 | computing device |

| $T_1$ | inlet fluid temperature |
| $T_2$ | return fluid temperature |
| $q$ | flow rate |
| $k$ | heat loss rate |
| $\overline{u}$ | averaged inlet temperature |

**Claims**

1. Method for monitoring the state-of-condition of one or more pipes in a district heating distribution network (1), the heating distribution network comprising a plurality of consumer sites (3), **characterized by**:

   a) determining a flow rate ($q$) and an inlet fluid temperature ($T_1$) at a consumer site (3),
   b) detecting an event of fluid consumption,
   c) determining a change of the inlet fluid temperature ($T_1$) in the time period of the event,
   d) calculating a characteristic value based on the determined change of the fluid inlet tempera-

ture ($T_1$) and the flow rate,
   e) repeating the steps b) to d) for a period of time, and
   f) monitoring the characteristic values ($k$) or derived values based on the characteristic values as an indicator for the state-of-condition of a pipe connected to the consumer site (3).

2. Method according to claim 1, **characterized in that** the event of fluid consumption is an increase of the flow rate from a low flow rate to a high flow rate and that the change of the inlet fluid temperature ($T_1$) is a rise of the inlet fluid temperature ($T_1$) in at least a part of the time period of the event and preferably in the period of said high flow rate ($q_{new}$) during the event.

3. Method according to claim 1 or 2, **characterized in that** the characteristic value is a heat loss rate ($k$) calculated on the basis of the determined inlet fluid temperature rise and at least one determined flow rate ($q$), wherein preferably the heat loss rate ($k$) is calculated on the basis of the determined inlet fluid temperature ($T_1$) rise, the detected low flow rate ($q_0$) before the event and the detected high flow rate ($q_{new}$) during the event.

4. Method according to one of the preceding claims, **characterized in that** the characteristic value is a heat loss rate k which is calculated according to the following formula

$$k = \frac{du}{dt} \cdot \frac{1}{\overline{u}\left(\frac{q_{new}}{q_0} - 1\right)}$$

wherein $\frac{du}{dt}$ is the rate of change during the inlet fluid temperature ($T_1$) rise, $\overline{u}$ is the averaged inlet fluid temperature during the event or during a part of the event, $q_0$ is the low flow rate before the event and $q_{new}$ is the high flow rate during the event.

5. Method according to one of the preceding claims, **characterized in that** an event with an increase in flow rate ($q$) is triggering steps b) to d) only in case that the flow rate increases from a low flow rate $q_0$ which has been constant over a predefined period of time.

6. Method according to one of the preceding claims, **characterized in that** a mean characteristic value ($k_{average}$) is calculated on the basis of a multitude of characteristic values ($k$) determined over time (t).

7. Method according to one of the preceding claims, **characterized in that** the state-of-condition is evaluated on the basis of a statistical distribution of a multitude of characteristic values ($k$) or on the basis of a statistical distribution of mean characteristic values determined over time.

8. Method according to one of the preceding claims, **characterized in that** a change of the state-of-condition is determined if the characteristic values ($k$) or the mean characteristic values shift over time, preferably if a heat loss rate shifts over time.

9. Method according to one of the preceding claims, **characterized in that** for determining a change of the state-of-condition the characteristic values ($k$)or the mean characteristic values of a consumer site (3) are compared to the characteristic values ($k$) or the mean characteristic values of one or more neighboring consumer site (3).

10. Method according to one of the preceding claims, **characterized in that** the flow rate ($q$) and the inlet fluid temperature ($T_1$) are determined by a heat meter (13) and **in that**, preferably, the characteristic value is determined by the heat meter (13).

11. Method according to one of the preceding claims, **characterized in that** the characteristic values ($k$), derived values based on the characteristic values and/or mean characteristic values determined in a heat meter (13) are transmitted to a Head End System (21), wherein data analysis of the characteristic values ($k$) and monitoring of the state-of-condition of the pipes is carried out in the Head End System (21).

12. Method according to one of the preceding claims, **characterized in that** data relating to the dimension and/or properties of the pipes (15, 17) are taken into consideration for analysis of the characteristic values and/or monitoring the state-of-condition.

13. Method according to any of the claims 3 to 12, **characterized in that** in addition to the heat loss rate ($k$), information of the length of a service pipe (15, 17) from a main distribution pipe to the consumer site (3) is acquired and used to calculate a heat transfer coefficient of a length unit of the service pipe (15, 17) on the basis of the heat loss rate ($k$) and the information of the length.

14. Heat meter (13) for measurement of the heat consumption at a consumer site (3) of a district heating distribution network (1), the heat meter (13) comprising at least one flow sensor (16), at least one temperature sensor (19) and a computing device (23) configured such that

it determines a flow rate ($q$) and an inlet fluid temperature ($T_1$) at the consumer site (3) on basis of signals output by the flow sensor (16) and the temperature sensor (19), it detects an event of fluid consumption, preferably an increase in flow rate from a low flow rate to a high flow rate, it determines a change of the inlet fluid temperature ($T_1$), preferably a rise of the inlet fluid temperature ($T_1$) in the period of said event, preferably at a high flow rate during said event, and calculates at least one characteristic value based on the temperature rise, said characteristic value being an indicator for the state-of-condition of a pipe connected to the consumer site (3).

15. Heat meter (13) according to claim 14, **characterized in that** it comprises a communication interface (22) configured for transmitting the at least one characteristic value or a derived value based on the characteristic value to a Head End System (21).

16. Heat meter (13) according to claim 14 or 15, **characterized in that** the heat meter (13) and the computing device (23) are configured to determine characteristic values on basis of determined inlet fluid temperature ($T_1$) changes in a repetitive manner.

17. Heat meter (13) according to claim 16, **characterized in that** the computing device (23) is configured to calculate mean characteristic values on basis of a multitude of determined characteristic values, wherein preferably the computing device (23) and the communication interface (22) are configured to transmit the mean characteristic values to a Head End System (21).

18. Heating distribution network control system comprising a multitude of heat meters (13) according to one of the claims 14 to 17 and a Head End System (21) communicating with the heat meters (13), wherein the heat meters (13) and the Head End System (21) are configured to carry out a method according to one of the claims 1 to 13.

Fig.1

Fig.2

Fig.3

Fig.4

Fig.5

EUROPEAN SEARCH REPORT

**Application Number**

EP 24 22 0245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 261 511 A1 (KAMSTRUP AS [DK]) 18 October 2023 (2023-10-18) * the whole document * ----- | 1-18 | INV. F24D10/00 F24D19/10 F24H15/144 |
| A | EP 3 531 368 A1 (KAMSTRUP AS [DK]) 28 August 2019 (2019-08-28) * the whole document * ----- | 1-18 | F24H15/104 F24H15/212 F24H15/238 F24H15/414 |
| A | EP 3 112 823 A1 (KAMSTRUP AS [DK]) 4 January 2017 (2017-01-04) * the whole document * ----- | 1-18 | F24H15/443 F24H15/45 |
| A | EP 2 000 788 A1 (KAMSTRUP AS [DK]) 10 December 2008 (2008-12-10) * the whole document * ----- | 1-18 | |

**TECHNICAL FIELDS SEARCHED (IPC)**

F24D
F24H
G01K
G06Q

The present search report has been drawn up for all claims

| Place of search | Date of completion of the search | Examiner |
|---|---|---|
| Munich | 20 May 2025 | García Moncayo, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 22 0245

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | | Publication date | Patent family member(s) | | Publication date |
|---|---|---|---|---|---|
| EP 4261511 | A1 | 18-10-2023 | EP | 4261511 A1 | 18-10-2023 |
| | | | EP | 4508403 A1 | 19-02-2025 |
| | | | WO | 2023198713 A1 | 19-10-2023 |
| EP 3531368 | A1 | 28-08-2019 | CN | 110177005 A | 27-08-2019 |
| | | | DK | 3531368 T3 | 20-12-2021 |
| | | | EP | 3531368 A1 | 28-08-2019 |
| | | | LT | 3531368 T | 27-12-2021 |
| | | | PL | 3531368 T3 | 31-01-2022 |
| EP 3112823 | A1 | 04-01-2017 | NONE | | |
| EP 2000788 | A1 | 10-12-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3531368 A1